(19) Europäisches Patentamt
European Patent Office
Office européen des brevets

(11) **EP 1 080 464 B1**

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(21) Anmeldenummer: **99927813.8**

(22) Anmeldetag: **31.05.1999**

(51) Int Cl.⁷: **G10L 19/00**

(86) Internationale Anmeldenummer:
**PCT/EP99/03766**

(87) Internationale Veröffentlichungsnummer:
**WO 99/063522 (09.12.1999 Gazette 1999/49)**

(54) **VERFAHREN UND ANORDNUNG ZUR SPRACHCODIERUNG**

METHOD AND DEVICE FOR VOICE ENCODING

PROCEDE ET DISPOSITIF DE CODAGE DE LA PAROLE

(84) Benannte Vertragsstaaten:
**DE FR GB**

(30) Priorität: **29.05.1998 EP 98109868**

(43) Veröffentlichungstag der Anmeldung:
**07.03.2001 Patentblatt 2001/10**

(73) Patentinhaber: **SIEMENS AKTIENGESELLSCHAFT**
**80333 München (DE)**

(72) Erfinder:
• **XU, Wen**
**D-82008 Unterhaching (DE)**

• **HEINEN, Stefan**
**D-52849 Düren (DE)**

(56) Entgegenhaltungen:
**EP-A- 0 865 027**

• **KATAOKA A ET AL: "A 6.4-KBIT/S VARIABLE-BIT-RATE EXTENSION TO THE G.729 (CS-ACELP) SPEECH CODER" IEICE TRANSACTIONS ON INFORMATION AND SYSTEMS, Bd. E80-D, Nr. 12, 1. Dezember 1997 (1997-12-01), Seiten 1183-1189, XP000730850 ISSN: 0916-8532**

## Beschreibung

Die Erfindung bezieht sich auf Verfahren und Anordnungen zur Sprachcodierung, bei denen das Sprachsignal durch eine Kombination aus Sprachparametern und Anregungssignalen, insbesondere nach dem CELP-Prinzip codiert wird.

Quellensignale bzw. Quelleninformationen wie Sprach-, Ton-, Bild- und Videosignale beinhalten fast immer statistische Redundanz, also redundante Informationen. Durch eine Quellencodierung kann diese Redundanz stark verringert werden, so daß eine effiziente Übertragung bzw. Speicherung des Quellensignals ermöglicht wird. Diese Redundanzreduktion beseitigt vor der Übertragung redundante Signalinhalte, die auf der Vorkenntnis von z.B. statistischen Parametern des Signalverlaufs beruhen. Die Bitrate der quellencodierten Informationen wird auch Codierrate oder Quellbitrate genannt. Nach der Übertragung werden bei der Quellendecodierung diese Anteile dem Signal wieder zugesetzt, so daß objektiv und/oder subjektiv kein Qualitätsverlust nachweisbar ist.

Auf der anderen Seite ist es üblich, bei der Signalübertragung, gezielt Redundanz durch Kanalcodierung wieder hinzuzufügen, um die Beeinflussung der Übertragung durch Kanalstörungen weitgehend zu beseitigen. Durch zusätzliche redundante Bits wird es dem Empfänger bzw. Decoder ermöglicht, Fehler zu erkennen und eventuell auch zu korrigieren. Die Bitrate der kanalcodierten Informationen wird auch Bruttobitrate genannt.

Um Informationen, insbesondere Sprachdaten, Bilddaten oder andere Nutzdaten mittels der begrenzten Übertragungskapazitäten eines Übertragungsmediums, insbesondere einer Funkschnittstelle möglichst effizient übertragen zu können, werden diese zu übertragenden Informationen also vor der Übertragung durch eine Quellencodierung komprimiert und durch eine Kanalcodierung gegen Kanalfehler geschützt. Dazu sind jeweils unterschiedliche Verfahren bekannt. So kann beispielsweise im GSM (Global System for Mobile Communication) System Sprache mittels eines Full Rate Sprachcodecs eines Half Rate Sprachcodecs oder eines Enhanced Full Rate Sprachcodecs (EFR) codiert werden.

Aus dem Stand der Technik ist das Dokument Kataoka et al.: "A 6.4 kbit/s Variable-Bit-Rate Extension to the G.729 (CS-ACELP) Speech Coder", IEICE Transactions on Information and Systems, Dezember 1997, Seiten 1183 - 1189 bekannt, das ein Sprachcodierverfahren offenbart, bei dem ein Sprachsignal durch eine Kombination aus Sprachparametern und Anregungssignalen in Form von Vektoren codiert wird, wobei die Codierung der Vorzeichen dreier von Null verschiedener Vektorelemente der besagten Vektoren durch ein Global Sign mit nur einem Bit durchgeführt wird.

Als Sprachcodec wird im Rahmen dieser Anmeldung auch ein Verfahren zur Encodierung und/oder zur entsprechenden Decodierung bezeichnet, das auch eine Quellen und/oder Kanalcödierung umfassen kann.

Im Rahmen der Weiterentwicklung des Europäischen Mobilfunkstandards GSM und der Entwicklung neuer Mobilfunksysteme, die auf einem CDMA-Verfahren basieren, wie das sich in der Standardisierung befindliche UMTS (Universal Mobile Telecommunications System), werden neue Verfahren für die codierte Sprachübertragung entwickelt, die es ermöglichen, die gesamte Datenrate, sowie die Aufteilung der Datenrate auf die Quellen- und Kanalcodierung je nach Kanalzustand und Netzbedingungen (Systemlast) adaptiv einzustellen. Dabei sollen statt der oben beschriebenen, eine feste Quellbitrate aufweisenden, Sprachcodecs neue Sprachcodecs zum Einsatz kommen, die in unterschiedlichen Codecmodi betreibbar sind, wobei sich die Codecmodi hinsichtlich ihrer Quellbitrate (Codierrate) unterscheiden.

Hauptziele derartiger AMR (Adaptive Multirate)-Sprachcodecs mit variabler Quellbitrate oder veränderlicher Codierrate sind, Festnetzqualität der Sprache bei unterschiedlichen Kanalbedingungen zu erzielen und optimale Verteilung der Kanalkapazität unter Berücksichtigung bestimmter Netzparameter zu gewährleisten.

Der Erfindung liegt nun das Problem zugrunde, ein Verfahren und eine Anordnung zur Sprachcodierung anzugeben, die es ermöglichen, Sprachsignale robust gegen Übertragungsfehler und mit relativ geringem Aufwand zu codieren.

Dieses Problem wird gemäß den Merkmalen der unabhängigen Patentansprüche gelöst. Weiterbildungen der Erfindung ergeben sich aus den abhängigen Ansprüchen.

Die Erfindung beruht demnach auf dem Gedanken, zur Codierung von Vektoren zur Beschreibung von Sprachparametern oder Anregungssignalen Positionen bestimmter vorgegebener von Null verschiedener Vektorelemente und Vorzeichen dieser Vektorelemente getrennt voneinander zu codieren.

Das Problem wird außerdem gelöst durch Anordnungen zur Sprachcodierung, bei denen jeweils ein digitaler Signalprozessor derart eingerichtet ist, daß zur Codierung von Vektoren zur Beschreibung von Sprachparametern oder Anregungssignalen Positionen bestimmter vorgegebener von Null verschiedener Vektorelemente und Vorzeichen dieser Vektorelemente getrennt voneinander codiert werden.

Die Erfindung betrifft ganz allgemein Verfahren zur Sprachcodierung, bei denen das Sprachsignal durch eine Kombination aus Sprachparametern und Anregungssignalen codiert wird. Dabei handelt es sich bei den Sprachparametern auch um Parameter oder Kenngrößen eines der Spracherzeugung zugrundeliegenden statistischen Modells, beispielsweise um LPC- oder LTP-Filterkoeffizienten, und bei den Anregungssignalen um Signale der erregenden

**EP 1 080 464 B1**

Prozesse dieses Modells. Diese Prozesse können entweder statistisch oder deterministisch modelliert werden. Beispiele für eine statistische Modellierung sind Vocoder-Verfahren, bei denen die Anregungssignale durch Rauschquellen erzeugt werden. Bei einer deterministischen Modellierung werden die Anregungssignale mit Hilfe des zugrundeliegenden Modells aus dem Sprachsignal gewonnen und quantisiert. Beispiele hierfür sind RPE/LTP (GSM Full Rate Codec), VSELP (GSM Half Rate Codec), und ACELP (GSM Enhanced Full Rate Codec).

Ausführungsbeispiele werden nachfolgend anhand der folgenden Zeichnungen dargestellt und erläutert.

Figur 1    schematische Darstellung wesentlicher Elemente einer nachrichtentechnischen Übertragungskette;
Figur 2    schematische Darstellung eines auf dem CELP-Prinzip basierenden AMR-Coders;
Figur 3    Prinzipschaltbild einer Prozessoreinheit.

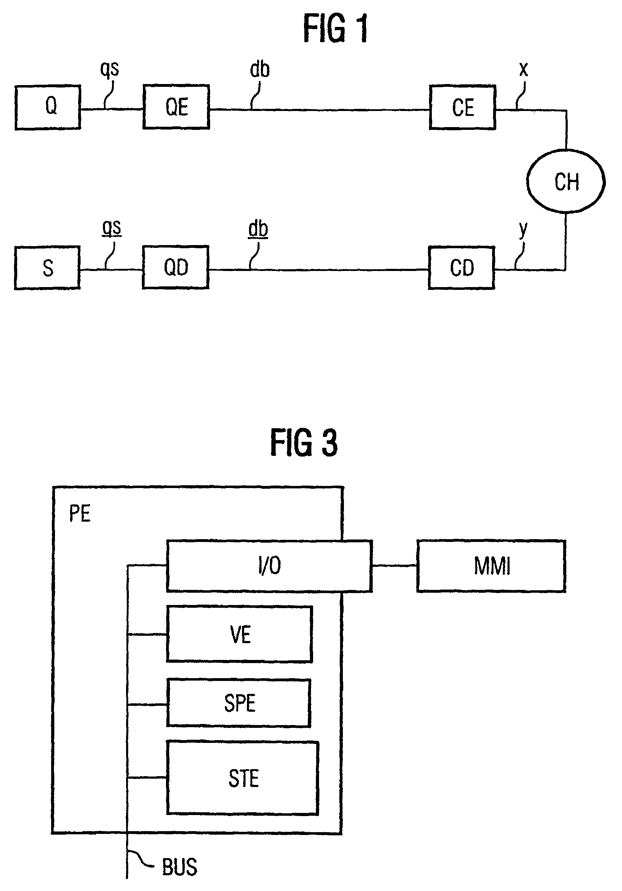

Figur 1 zeigt eine Quelle Q, die Quellensignale qs erzeugt, die von einem Quellencodierer QE, wie dem GSM fullrate Sprachcodierer, zu aus Symbolen bestehenden Symbolfolgen komprimiert werden. Bei parametrischen Quellencodierverfahren werden die von der Quelle Q erzeugten Quellensignale qs (z.B. Sprache) in Blöcke unterteilt (z.B. zeitliche Rahmen) und diese getrennt verarbeitet. Der Quellencodierer QE erzeugt quantisierte Parameter (z.B. Sprachparameter oder Sprachkoeffizienten), die im folgenden auch als Symbole einer Symbolfolge bezeichnet werden, und die die Eigenschaften der Quelle im aktuellen Block auf eine gewisse Weise widerspiegeln (z.B. Spektrum der Sprache in Form von Filterkoeffizienten, Amplitudenfaktoren, Anregungsvektoren). Diese Symbole weisen nach der Quantisierung einen bestimmten Symbolwert auf.

Die Symbole der Symbolfolge bzw. die entsprechenden Symbolwerte werden durch eine binäre Abbildung (Zuordnungsvorschrift), die häufig als Teil der Quellencodierung QE beschrieben wird, auf eine Folge binärer Codewörter abgebildet, die jeweils mehrere Bitstellen aufweisen. Werden diese binären Codewörter beispielsweise nacheinander als Folge binärer Codewörter weiterverarbeitet, so entsteht eine Folge von quellencodierten Bitstellen, die in einer Rahmenstruktur eingebettet sein können. Nach einer derart durchgeführten Quellcodierung liegen also Quellbits oder Datenbits db mit einer von der Art der Quellcodierung abhängigen Quellbitrate (Codierrate) strukturiert in Rahmen vor.

Unter dem Begriff Codebuch soll hier eine Tabelle mit sämtlichen Quantisierungs-Repräsentanten verstanden werden. Die Einträge dieser Tabelle können sowohl skalare als auch vektorielle Grössen sein. Skalare Codebücher können beispielsweise zur Quantisierung von Amplitudenfaktoren eingesetzt werden, da diese in der Regel skalare Größen sind. Beipiele für den Einsatz vektorieller Codebücher ist die Quantisierung von LSF(Line Spectrum Frequencies) und die der stochastischen Anregung.

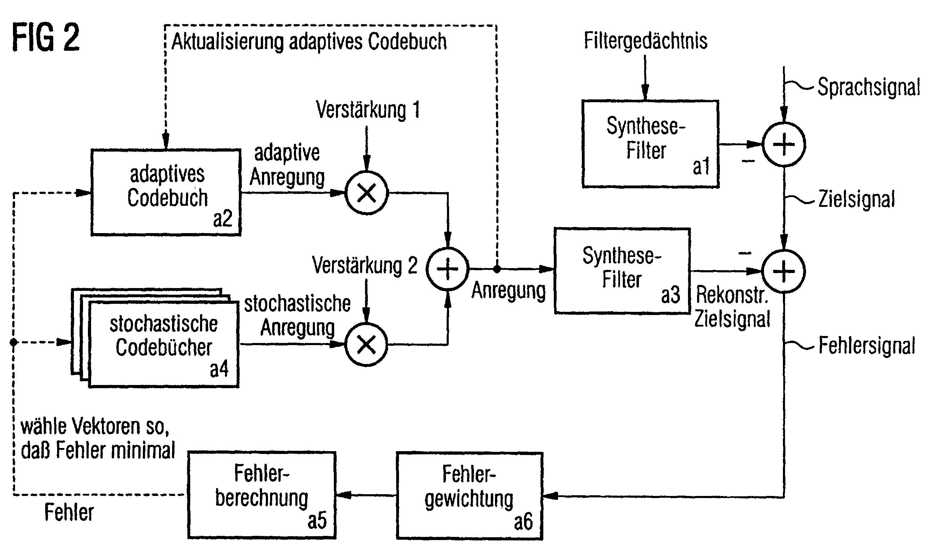

Figur 2 zeigt in einer Prinzipdarstellung eine spezielle Variante eines Quellcoders, insbesondere eines Sprachcoders, nämlich einen auf einem CELP (Code Excited Linear Predictive) -Prinzip basierenden AMR-Coder.

Beim CELP-Prinzip handelt es sich um ein Analyse-durch-Synthese-Verfahren. Hierbei wird eine aus dem aktuellen Sprachabschnitt gewonnene Filterstruktur durch nacheinander einem Codebuch entnommene Anregungsvektoren (Codevektoren) angeregt. Das Ausgangssignal des Filters wird mittels eines geeigneten Fehlerkriteriums mit dem aktuellen Sprachabschnitt verglichen und der fehlerminimierende Anregungsvektor selektiert. Zum Empfänger übertragen wird eine Darstellung der Filterstruktur sowie die Platznummer des selektierten Anregungsvektors.

Eine spezielle Variante eines CELP-Verfahrens verwendet ein algebraisches Codebuch, das auch oft als sparse-algebraiccode bezeichnet wird. Es ist ein Multipulscodebuch, das mit binären (+/-1) oder ternären Pulsen (0, +/-1) gefüllt ist. Innerhalb der Anregungsvektoren sind jeweils nur wenige Positionen mit Pulsen besetzt. Nach Auswahl der Positionen wird der gesamte Vektor mit einem Amplitudenfaktor gewichtet. Ein derartiges Codebuch weist mehrere Vorteile auf. Zum einen belegt es keinen Speicherplatz, da die erlaubten Positionen der Pulse durch eine algebraische Rechenvorschrift ermittelt werden, zum anderen kann es aufgrund seiner Konstruktion sehr effizient nach den besten Pulspositionen durchsucht werden.

Im folgenden wird anhand der Figur 2 zunächst eine Ausführungsvariante eines herkömmlichen CELP-Coders beschrieben. Ein zu approximierendes Zielsignal wird durch Absuchen zweier Codebücher nachgebildet. Dabei unterscheidet man zwischen einem adaptiven Codebuch (a2), dessen Aufgabe die Nachbildung der harmonischen Sprachanteile ist und einem stochastischen Codebuch (a4), das zur Synthese der nicht durch Prädiktion gewinnbaren Sprachanteile dient. Das adaptive Codebuch (a2) ändert sich abhängig vom Sprachsignal, während das stochastische Codebuch (a4) zeitinvariant ist. Die Suche nach den besten Anregungs-Codevektoren läuft derart ab, daß nicht eine gemeinsame, d.h. gleichzeitige Suche in den Codebüchern stattfindet, wie es für eine optimale Auswahl der Anregungs-Codevektoren erforderlich wäre, sondern aus Aufwandsgründen zunächst das adaptive Codebuch (a2) durchsucht wird. Ist der gemäß des Fehlerkriteriums beste Anregungs-Codevektor gefunden, subtrahiert man dessen Beitrag zum rekonstruierten Zielsignal vom Zielvektor (Zielsignal) und erhält den durch einen Vektor aus dem stochastischen Codebuch (a4) noch zu rekonstruierenden Teil des Zielsignals. Die Suche in den einzelnen Codebüchern erfolgt nach dem gleichen Prinzip. In beiden Fällen wird der Quotient aus dem Quadrat der Korrelation des gefilterten Anregungs-Codevektors mit dem Zielvektor und der Energie des gefilterten Zielvektors für alle Anregungs-Codevektoren berechnet.

Derjenige Anregungs-Codevektor, der diesen Quotienten maximiert, wird als bester Anregungs-Codevektor angesehen, der das Fehlerkriterium (a5) minimiert. Die vorgeschaltete Fehlergewichtung (a6) gewichtet den Fehler entsprechend der Charakteristik des menschlichen Gehörs. Die Position des gefundenen Anregungs-Codevektors innerhalb des Anregungs-Codebuchs wird an den Decoder übertragen.

Durch die Berechnung des genannten Quotienten wird für jeden Anregungs-Codevektor implizit der richtige (Codebuch-)Amplitudenfaktor (Verstärkung 1, Verstärkung 2) ermittelt. Nachdem der beste Kandidat aus beiden Codebüchern bestimmt ist, kann man durch eine gemeinsame Optimierung der Verstärkung den qualitätsmindernden Einfluß der sequentiell durchgeführten Codebuchsuche reduzieren. Dabei gibt man den ursprünglichen Zielvektor erneut vor und berechnet zu den nun ausgewählten Anregungs-Codevektoren passend die besten Verstärkungen, die sich meist geringfügig von denen unterscheiden, die während des Codebuchsuchens ermittelt wurden.

Beim CELP-Prinzip kann zum Auffinden des besten Anregungs-Codevektors jeder Kandidatenvektor einzeln gefiltert (a3) und mit dem Zielsignal verglichen werden.

Schließlich werden Filterparameter, Amplituden-faktoren und Anregungs-Codevektoren in binäre Signale umgesetzt und in einer festen Struktur eingebettet in Rahmen übertragen. Bei den Filterparmatern kann es sich um LPC (Linear Predictive Coding)-Koeffizienten, LTP (Long Term Prediction)-Indizes oder LTP (Long Term Prediction)-Amplitudenfaktoren handeln.

Das LPC-Restsignal bzw. Anregungssignal wird vektoriell quantisiert. Um den ROM-Bedarf klein zu halten, wird ein algebraisches Codebuch verwendet. D.h. der Vorrat an Quantisierungs-Repräsentanten liegt nicht explizit in einer Tabelle vor, sondern die verschiedenen Repräsentanten können mit Hilfe einer algebraischen Rechenvorschrift aus einem Indexwert bestimmt werden. Dies hat zusätzlich Komplexitäts-vorteile bei der Codebuchsuche.

Die algebraische Rechenvorschrift für die Bestimmung der Anregungs-Codevektoren aus einem Indexwert erfolgt mittels einer Zerlegung des Vektorraums in sog. Tracks. Innerhalb eines Tracks (Vektor) können nur Komponenten (Vektorelemente), die auf einem track-spezifischen Raster liegen, von Null verschiedene Werte annehmen. Von Null verschiedene Positionen werden als Pulspositionen bezeichnet. Die Pulse können je nach Codebuch entweder einen binären (-1/+1) oder ternären (-1/0/+1) Wertebereich haben. Die Überlagerung der einzelnen Tracks liefert schließlich den Anregungs-Codevektor.

Dies sei anhand folgenden einfachen Beispiels erläutert:

Algebraisches Codebuch der Dimension 20, das durch 2 Tracks bildbar ist.

Zeichenerklärung:

0: erlaubte Position im Track, kein Puls

#: unerlaubte Position im Track

+: positiver Puls

-: negativer Puls

EP 1 080 464 B1

| Position | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|
| Track1: | 0 | # | 0 | # | 0 | # | 0 | # | 0 | # | 0 | # | + | # | 0 | # | 0 | # | 0 | # |
| Track2: | # | 0 | # | - | # | 0 | # | 0 | # | 0 | # | 0 | # | 0 | # | 0 | # | 0 | # | 0 |
| Anreg: | 0 | 0 | 0 | - | 0 | 0 | 0 | 0 | 0 | 0 | 0 | 0 | + | 0 | 0 | 0 | 0 | 0 | 0 | 0 |

Zur Codierung dieses Codebuchs sind pro Track demnach 10 Positionen sowie das Vorzeichen des gesetzten Pulses zu codieren. Eine genauere Quantisierung des Anregungssignals erreicht man mit Codebüchern, die pro Track mehr als einen Puls aufweisen, da dann auch die Überlagerung zweier Pulse möglich ist.

Ein Track (Vektor) wird also durch Pulse (von Null verschieden Vektorelemente) beschrieben, wobei die Pulse durch ihre Position (Vektorelementindex) und ihr Vorzeichen beschreibbar sind. Die Gesamtmenge der möglichen Puls-Position-Kombinationen wird mit Hilfe eines Gesamtindex beschrieben.

Die zur Codierung des gefundenen Anregungsvektors erforderliche Codewortlänge setzt sich zusammen aus der Anzahl der zur Codierung der Pulspositionen und Vorzeichen benötigten Bits. Wird pro Track nur ein Puls gesetzt, so benötigt man neben der Anzahl an Bits zur Codierung seiner Position ein weiteres Bit für die Codierung seines Vorzeichens.

Eine effiziente Codierung der Vorzeichen mit ebenfalls nur einem Bit für den Fall, daß zwei Pulse pro Track gesetzt werden, wird bereits im GSM-EFR Codec eingesetzt. Hier wird die Information der Positionsreihenfolge ausgenutzt. Befinden sich zwei Pulse im Positionsraster desselben Tracks, so wird im Fall, daß beide Pulse gleichnamige Vorzeichen haben, derjenige Puls zuerst codiert, der die kleinere Position innerhalb des Rasters einnimmt. Im Fall unterschiedlicher Vorzeichen wird der Puls, der die höhere Position belegt, zuerst codiert. Übertragen wird lediglich das Vorzeichenbit des zuerst codierten Pulses. Das Vorzeichen des zweiten Pulses wird decoderseitig durch Analyse der Codierreihenfolge der Pulspositionen bestimmt.

Dieses Prinzip soll an einem Codebuch mit drei Pulsen pro Track verdeutlicht werden. In diesem Fall läßt sich die Vorzeicheninformation der Pulse eines Tracks weiterhin mit einem Bit codieren, indem das Prinzip der Vorzeichencodierung durch gezielte Veränderung der Codierreihenfolge erweitert wird. Dies zeigt die folgende Abschätzung: Bei Übertragung eines Vorzeichenbits ergeben sich bei $P_T=3$ Pulsen pro Track

$$N_{VZ} = \frac{2^{P_T}}{2} = \frac{2^3}{2} = 4$$

mögliche Vorzeichenkombinationen. Die Anzahl $N_{perm}$ der möglichen Permutationen der Pulspositionen ergibt sich zu

$$N_{perm}=P_T!=3!=6 >N_{VZ}$$

Solange die Anzahl möglicher Permutationen größer ist als die Anzahl der möglichen Vorzeichenkombinationen, muß sich die Vorzeicheninformation eines Tracks durch gezielte Veränderung der Codierreihenfolge der Pulspositionen übertragen lassen. Würde man etwa ein Codebuch konstruieren, das vier Pulse pro Track vorsieht, so genügte die alleinige Permutation der Codierreihenfolge zur Vorzeichencodierung, ein zusätzliches Vorzeichenbit wäre nicht erforderlich.

Diese effiziente Codierung der Vorzeicheninformationen eines Anregungsvektors wird jedoch durch eine erhöhte Anfälligkeit gegenüber Störungen auf dem Übertragungskanal erkauft. Die Störung eines Vorzeichenbits eines Tracks bewirkt im ungünstigsten die Umkehrung aller Vorzeichen in diesem Track. Ebenso kann die Störung des Parameters einer Pulsposition die Vorzeichen aller Pulse desselben Tracks treffen.

Aus diesem Grunde beschreibt die Erfindung eine deutlich robustere Vorzeichencodierung. Dabei wird die Gesamtmenge der möglichen Puls-Positionen durch ein geeignetes algebraisches Verfahren mit Hilfe eines einzigen Index adressiert. Unabhängig davon werden die Vorzeichen der Pulse jeweils mit einem Bit codiert.

Das verbesserte Verfahren soll am Beispiel des algebraischen Codebuches für die Rate 9.5 kBit/s erläutert werden. Bei diesem Codebuch werden zwei Pulse auf 14 mögliche Positionen gesetzt. Für das Codierschema mit Permutationscodierung werden ein Bit für das erste Pulsvorzeichen und zweimal 4 Bit für die beiden Pulspositionen, also insgesamt 9 Bit benötigt.

Das robuste Codierverfahren codiert die möglichen Pulspositionen unabhängig von den Vorzeichen. Da beide Pulse auch an der gleichen Position liegen können, handelt es sich um Kombinationen mit Wiederholung. Aus der Kombinatorik ist bekannt, daß in diesem Fall

$$\binom{14+2-1}{2} = \binom{15}{2} = 105 < 2^7$$

Möglichkeiten existieren. Da diese Zahl kleiner als $2^7=128$ ist, reichen 7 Bit für die Codierung der Positionen aus. Die beiden Vorzeichen werden jeweils mit einem Bit codiert. Auf diese Weise wird eine Entkopplung von Vorzeichen und Pulspositionen erreicht, ohne die zur Codierung der Anregungsvektoren benötigte Bitrate zu erhöhen.

In Simulationen wurden jeweils einzelne Bitpositionen der Codebuch-Indizes mit 100% Fehlerrate gestört und das resultierende Sprach-SNR nach der Resynthese gemessen. Dabei konnte die Sensitivität der Vorzeichen aufgrund der robusteren Codierung um ca. 3dB verbessert werden.

Bei einer Ausführungsvariante der Erfindung weisen unterschiedliche Codecmodi aufgrund der unterschiedlichen Codierraten in der Regel unterschiedliche Rahmengrößen und daher auch unterschiedliche Strukturen auf, in denen die zur Beschreibung der Filterparameter, Amplitudenfaktoren oder Anregungs-Codevektoren dienenden Bitstellen eingebettet sind.

Zur Realisierung einer variablen Codierrate kann die Codierratenänderung durch eine entsprechende Änderung der Bitstellenanzahl zur Beschreibung eines einem stochastischen Codebuches entnommenen Anregungs-Codevektors realisiert werden. Ein Umschalten des Codecmodus führt also durch ein Umschalten auf ein dem neuen Codecmodus entsprechendes stochastisches Codebuch zur Auswahl von in diesem Codebuch enthaltenen Anregungs-Codevektoren, zu deren Beschreibung eine entsprechend veränderte Anzahl von Bitstellen erforderlich ist. Es sind also entsprechend der Anzahl der unterschiedlichen Codecmodi unterschiedliche stochastische Codebücher vorhanden.

Figur 3 zeigt eine Prozessoreinheit PE, die insbesondere in einer Kommunikationseinrichtung, wie einer Basisstation BS oder Mobilstation MS enthalten sein kann. Sie enthält eine Steuereinrichtung STE, die im wesentlichen aus einem programmgesteuerten Mikrocontroler besteht, und eine Verarbeitungseinrichtung VE, die aus einem Prozessor, insbesondere einem digitalen Signalprozessor besteht, die beide schreibend und lesend auf Speicherbausteine SPE zugreifen können.

Der Mikrocontroler steuert und kontrolliert alle wesentlichen Elemente und Funktionen einer Funktionseinheit, die die Prozessoreinheit PE enthält. Der digitale Signalprozessor, ein Teil des digitalen Signalprozessors oder ein spezieller Prozessor ist für die Durchführung der Sprachencodierung bzw. Sprachdecodierung zuständig. Die Auswahl eines Sprachcodecs kann auch durch den Mikrocontroler oder den digitalen Signalprozessor selbst erfolgen.

Eine Input/Output-Schnittstelle I/O, dient der Ein/Ausgabe von Nutz- oder Steuerdaten beispielsweise an eine Bedieneinheit MMI, die eine Tastatur und/oder ein Display enthalten kann. Die einzelnen Elemente der Prozessoreinheit können durch ein digitales Bussystem BUS miteinander verbunden sein.

Anhand der Beschreibung kann ein Fachmann die Erfindung auch auf andere als in der Anmeldung erläuterte CELP-Codierverfahren anwenden.

**Patentansprüche**

**1.** Verfahren zur Sprachcodierung,

- bei dem ein Sprachsignal durch eine Kombination aus Sprachparametern und Anregungssignalen codiert wird,
- bei dem die Sprachparameter oder Anregungssignale durch Vektoren beschrieben werden,
- bei dem die Vektoren durch eine Überlagerung zumindest zweier Tracks gebildet werden,
- bei dem zumindest ein Track zumindest zwei von Null verschiedene Vektorelemente aufweist, und
- bei dem die Vorzeichen der von Null verschiedenen Vektorelemente unabhängig voneinander und unabhängig von den Positionen der von Null verschiedenen Vektorelemente codiert werden.

**2.** Verfahren nach Anspruch 1, bei dem die Sprachparameter oder Anregungssignale nach dem CELP-Prinzip aus den Sprachsignalen gewonnen werden.

**3.** Verfahren nach einem der vorhergehenden Ansprüche, bei dem die Positionen der von Null verschiedenen Vektorelemente zusammen zu einem Indexwert codiert werden.

**4.** Anordnung zur Sprachcodierung mit einer Prozessoreinheit, die derart eingerichtet ist, daß

- ein Sprachsignal durch eine Kombination aus Sprachparametern und Anregungssignalen codiert wird,
- die Sprachparameter oder Anregungssignale durch Vektoren beschrieben werden,
- die Vektoren durch eine Überlagerung zumindest zweier Tracks gebildet werden,
- zumindest ein Track zumindest zwei von Null verschiedene Vektorelemente aufweist, und
- die Vorzeichen der von Null verschiedenen Vektorelemente unabhängig voneinander und unabhängig von den Positionen der von Null verschiedenen Vektorelemente codiert werden.

**5.** Anordnung nach Anspruch 4, mit
einer Prozessoreinheit, die derart eingerichtet ist, daß die Sprachparameter und Anregungssignale nach dem CELP-Prinzip aus den Sprachsignalen gewonnen werden.

**6.** Anordnung nach einem der Ansprüche 4 bis 5,
einer Prozessoreinheit, die derart eingerichtet ist, daß die Positionen der von Null verschiedenen Vektorelemente zusammen zu einem Indexwert codiert werden.

**Claims**

**1.** Method for voice encoding,

- in which a voice signal is encoded by a combination of voice parameters and excitation signals,
- in which the voice parameters or excitation signals are described by vectors,
- in which the vectors are formed by superposing at least two tracks,
- in which at least one track has at least two vector elements which differ from zero, and
- in which the algebraic signs of the vector elements which differ from zero are encoded independently of one another and independently of the positions of the vector elements which differ from zero.

**2.** Method according to Claim 1, in which the voice parameters or excitation signals are obtained from the voice signals on the CELP principle.

**3.** Method according to one of the preceding claims, in which the positions of the vector elements which differ from zero are encoded together to form an index value.

**4.** Device for voice encoding, with a processor unit which is set up in such a way that

- a voice signal is encoded by a combination of voice parameters and excitation signals,
- the voice parameters or excitation signals are described by vectors,
- the vectors are formed by superposing at least two tracks,
- at least one track has at least two vector elements which differ from zero, and
- the algebraic signs of the vector elements which differ from zero are encoded independently of one another and independently of the positions of the vector elements which differ from zero.

**5.** Device according to Claim 4, with a processor unit which is set up in such a way that the voice parameters and excitation signals are obtained from the voice signals on the CELP principle.

**6.** Device according to one of Claims 4 or 5, with a processor unit which is set up in such a way that the positions of the vector elements which differ from zero are encoded together to form an index value.

**Revendications**

**1.** Procédé de codage de la voix,

- dans lequel un signal vocal est codé par une combinaison de paramètres vocaux et de signaux d'excitation,
- dans lequel les paramètres vocaux ou signaux d'excitation sont décrits par des vecteurs,
- dans lequel les vecteurs sont formés par superposition d'au moins deux pistes,
- dans lequel au moins une piste présente au moins deux éléments vectoriels différents de zéro, et
- dans lequel les signes des éléments vectoriels différents de zéro sont codés indépendamment les un des autres et indépendamment des positions des éléments vectoriels différents de zéro.

**2.** Procédé selon la revendication 1, dans lequel les paramètres vocaux ou les signaux d'excitation sont obtenus à partir des signaux vocaux selon le principe CELP.

**3.** Procédé selon l'une des revendications précédentes, dans lequel les positions des éléments vectoriels différents de zéro sont codés ensemble en une valeur d'indice.

4. Agencement de codage de la voie comprenant une unité de processeur qui est conçue de telle sorte que:

   - un signal vocal est codé par une combinaison de paramètres vocaux et de signaux d'excitation,
   - les paramètres vocaux ou les signaux d'excitation sont décrits par des vecteurs,
   - les vecteurs sont formés par superposition d'au moins deux pistes,
   - au moins une piste présente au moins deux éléments vectoriels différents de zéro, et
   - les signes des éléments vectoriels différents de zéro sont codés indépendamment les uns des autres et indépendamment des positions des éléments vectoriels différents de zéro.

5. Agencement selon la revendication 4, comprenant une unité de processeur qui est conçue de telle sorte que les paramètres vocaux et les signaux d'excitation sont obtenus à partir des signaux vocaux selon le principe CELP.

6. Agencement selon l'une des revendications 4 à 5, comprenant une unité de processeur qui est conçue de telle sorte que les positions des éléments vectoriels différents de zéro sont codées ensemble pour fournir une valeur d'indice.

# FIG 1

```
         qs              db                    x
  ┌─────┐     ┌─────┐              ┌─────┐
  │  Q  │─────│ QE  │──────────────│ CE  │───┐
  └─────┘     └─────┘              └─────┘   │
                                          ┌────┐
                                          │ CH │
                                          └────┘
         qs              db                    y  │
  ┌─────┐     ┌─────┐              ┌─────┐   │
  │  S  │─────│ QD  │──────────────│ CD  │───┘
  └─────┘     └─────┘              └─────┘
```

# FIG 3

```
  ┌──────────────────────────────────┐
  │ PE                                │
  │       ┌──────────────────┐       ┌──────────┐
  │   ┌───│       I/O        │───────│   MMI    │
  │   │   └──────────────────┘       └──────────┘
  │   │   ┌──────────────────┐
  │   ├───│       VE         │
  │   │   └──────────────────┘
  │   │   ┌──────────────────┐
  │   ├───│       SPE        │
  │   │   └──────────────────┘
  │   │   ┌──────────────────┐
  │   ├───│       STE        │
  │   │   └──────────────────┘
  │   │                              │
  └───┼──────────────────────────────┘
      └─ BUS
```

FIG 2